(19)

**Europäisches Patentamt**
**European Patent Office**
**Office européen des brevets**

(11) **EP 4 722 913 A1**

(12) **EUROPEAN PATENT APPLICATION**

(43) Date of publication:
08.04.2026 Bulletin 2026/15

(21) Application number: 25202091.2

(22) Date of filing: 15.09.2025

(51) International Patent Classification (IPC):
*G06F 9/50* (2006.01)  *G06N 20/00* (2019.01)

(52) Cooperative Patent Classification (CPC):
G06F 9/5072; G06N 3/08; G06N 20/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 04.10.2024 IN 202421075283

(71) Applicant: Tata Consultancy Services Limited
Mumbai, Maharashtra 400 021 (IN)

(72) Inventors:
• KRISHNAN, Ashwin
400601 Thane, Maharashtra (IN)
• PASUMARTI, Venkatesh
400601 Mumbai, Maharashtra (IN)
• INAMDAR, Samarth Sudarshan
400601 Mumbai, Maharashtra (IN)
• MONDAL, Arghyajoy
400601 Thane, Maharashtra (IN)
• NAMBIAR, Manoj Karunakaran
400021 Mumbai, Maharashtra (IN)
• SINGHAL, Rekha
New York, 10044 (US)

(74) Representative: Goddar, Heinz J.
Boehmert & Boehmert
Anwaltspartnerschaft mbB
Pettenkoferstrasse 22
80336 München (DE)

(54) **METHOD AND SYSTEM FOR DEPLOYMENT OF LARGE LANGUAGE MODELS (LLM) IN CLOUD INSTANCES**

(57) Existing model deployment approaches have the disadvantage that they do not consider feasibility of cloud instances for hosting a given LLM model. Embodiments disclosed herein provide a method and system for deployment of LLMs in a plurality of cloud instances. The system checks feasibility of the plurality of cloud instances for hosting an LLM, based on size of the LLM and storage space in each of the cloud instances. Further, a latency value for a plurality of batch sizes is determined for a plurality of LLM-accelerator pairs, in each of the plurality of cloud instances identified as feasible based on the feasibility check, using a performance model. Furthermore, a recommendation of one of the plurality of cloud instances identified as feasible is generated, based on the determined latency, a measured cost of deployment, a user workload, an application type, a plurality of latency constraints, and an evaluated performance.

receiving, via one or more hardware processors, configuration of a target Large Language Model (LLM) to be deployed, a user workload, an application type, and a plurality of latency constraints, as an input — 202

determining, via the one or more hardware processors, feasibility of each of a plurality of cloud instances comprising a plurality of hardware modules, with respect to accommodating the target LLM, comprising: — 204

receiving configuration data of each of the plurality of cloud instances — 204a

performing a feasibility check for each of the plurality of cloud instances, comprises, determining, by comparing the configuration data of each of the plurality of cloud instances with the configuration of the target LLM, whether the target LLM is feasible with each of the plurality of cloud instances in terms of size of the target LLM and available storage space at each of the plurality of cloud instances — 204b

determining, via the one or more hardware processors, by a performance model, a latency value for a plurality of batch sizes, for a plurality of target LLM-accelerator pairs, in each of a plurality of cloud instances identified as feasible based on the feasibility check — 206

generating, via the one or more hardware processors, a recommendation of one of the plurality of cloud instances identified as feasible, based on the determined latency, a measured cost of deployment, the user workload, the application type, the plurality of latency constraints, and an evaluated performance, wherein the recommended cloud instance is used to host the target LLM to perform an application for which the application type is received — 208

200   FIG. 2

EP 4 722 913 A1

**Description**

CROSS-REFERENCE TO RELATED APPLICATIONS AND PRIORITY

The present application claims priority to Indian application no. 202421075283 filed on October 4, 2024.

TECHNICAL FIELD

The disclosure herein generally relates to Large Language Models (LLMs), and, more particularly, to a method and system for deployment of Large Language Models (LLM) in cloud instances.

BACKGROUND

The advent of transformer-based large language models has marked a significant technological advancement in the field of artificial intelligence. These models excel in handling complex tasks such as summarization, question answering, information retrieval, and functioning as conversational bots, among others. This progress can be attributed to increased computational capabilities and the availability of large-scale training data. Models like GPT-4 have even succeeded in passing an interactive two-player Turing test. Their multimodal nature has spurred the development of numerous new models. Notable examples include GPT-2, GPT-3, CODEX, and WebGPT from the GPT family by OpenAI; Code LLaMA, and Giraffe from Meta; and PaLM, PaLM-E, and FLAN-PaLM from Google®.

A typical LLM-based application involves more than just the LLM itself, often including components like LLM agents or retrieval-augmented generation (RAG) systems. For instance, a RAG-based document classification application may include components for chunking, a vector database, reranking, and the LLM. These applications can be built using loosely coupled services, for which cloud deployment is particularly suitable. Cloud vendors offer a variety of services to support these components, such as Database as a Service, Infrastructure as a Service (e.g., EC2 in Amazon Web Services (AWS), Compute Engine in Google Cloud Platform (GCP)), and Function as a Service (e.g., Lambda functions in AWS). Another advantage of deploying LLMs on the cloud rather than using open-source services like ChatGPT is the enhanced data privacy and security they provide.

In addition to the advancements in large language models (LLMs), there has been a significant increase in hardware accelerators designed to support the deployment of deep learning models. Cloud providers like AWS, GCP, and Azure offer a wide range of hardware accelerators, including Gaudi, Tensor Processing Unit (TPU), Inferentia, and various Graphic Processing Units (GPUs) such as V100, A100, and H100.

A typical cloud instance may include a single accelerator (e.g., a single GPU or a single Inferentia-2 chip with 2 cores) or multiple accelerators (e.g., 2 or 4 GPUs, a 4 TPUv3 chip instance with 2 cores in each chip, or a Gaudi instance with 8 chips). CPUs and GPUs have traditionally been the go-to options for deploying LLMs for inference. However, experiments indicated that this may not always be the ideal choice. On cloud platforms, random deployment of LLMs may cause feasibility related issues in terms of various parameters, in turn adversely affecting the deployment as well as end application.

One of the existing model deployment approaches, MLPerf, has the disadvantage that it does not provide insights into how models should be configured on particular hardware or a cluster of such hardware, nor do they specify the framework to use for optimal performance. Their evaluation is conducted with a fixed input and output tokens' size for a batch size of one. In reality, latency and throughput (in tokens/s) are a function of batch size, input tokens, and output tokens. For instance, an application like essay writing using an LLM will have an input prompt size of up to 50-100 tokens with outputs of up to 500-1000 tokens. Similarly, document summarization may have larger input prompts with smaller output prompts. This significantly impacts latency and throughput, ultimately, the decision of choosing the right accelerator for inference.

SUMMARY

Embodiments of the present disclosure present technological improvements as solutions to one or more of the above-mentioned technical problems recognized by the inventors in conventional systems. For example, in one embodiment, A processor implemented method is provided. The method includes: receiving, via one or more hardware processors, configuration of a target Large Language Model (LLM) to be deployed, a user workload, an application type, and a plurality of latency constraints, as an input; determining, via the one or more hardware processors, feasibility of each of a plurality of cloud instances comprising a plurality of hardware modules, with respect to accommodating the target LLM, comprising: receiving configuration data of each of the plurality of cloud instances; and performing a feasibility check for each of the plurality of cloud instances, comprises, determining, by comparing the configuration data of each of the plurality of cloud instances with the configuration of the target LLM, whether the target LLM is feasible with each of the plurality of cloud instances in terms of size of the target LLM and available storage space at each of the plurality of cloud instances; determining, via the one or more hardware processors, by a performance model, a latency value for a plurality of batch sizes, for a plurality of target LLM-accelerator pairs, in each of a plurality of cloud instances identified as feasible based on the feasibility check; and generating, via the one or more hardware processors, a recommendation of one of the plurality of cloud instances identified as feasible, based on the determined latency, a measured cost of deployment, the user workload, the application type, the plurality of latency constraints, and an evaluated performance, wherein the recommended cloud instance is used to host the target LLM to perform an application for which the application type is received.

In an embodiment of the method, the performance model is a machine learning (ML) based model trained on a training data comprising a plurality of model defining parameters, a plurality of hardware defining parameters, and a plurality of application related features.

Further, in the method, the performance of each of the cloud instances identified as feasible, is evaluated with respect to the determined latency, and a throughput measured in terms of queries per hour.

Further, in the method, the plurality of model defining parameters comprise a) total number of parameters, b) total number of heads, c) dimension of each of the heads, d) number of key-value heads, e) total decoder layers, f) an embedding dimension, g) dimension of a feed-forward network, h) a maximum context length supported by the target LLM, i) total compute Operations, j) total memory operations, and k) total number of feed-forward networks, the plurality of hardware defining parameters comprise a) a maximum compute and memory bandwidth, b) total number of hardware accelerators in each of the plurality of cloud instances, and c) an inter-device communication latency, and the plurality of application related features comprise a) an average output context length, and b) an average input context length.

Further, in the method, the total compute operations and the total memory operations are estimated using a prompting technique, comprising: prompting a reference LLM, by sending to the reference LLM a base prompt that indicates how to calculate the memory operations and the compute operations of a plurality of layers of the target LLM; computing, by the reference LLM, in response to the base prompt, values of the total memory operations and the total compute operations; and verifying, using an estimator, the computed values of the total memory operations and the total compute operations, wherein, an error value, if measured while verifying the computed values, is used as a feedback to improve equations used in the base prompt to calculate the memory operations and the compute operations.

Further, in the method, the performance model is trained using:
a Time To First Token (TTFT) formulated as:

$$TTFT = k_1.i^2 + k_2.b^2 + 2.k_3.i.b + 2.k_4.i + 2.k_5.b + 2.k_6,$$

where,

$i$ is input sequence length, b is batch size, and $k_1$, $k_2$, $k_3$, $k_4$, $k_5$, and $k_6$ are constants with values optimized using an optimizer, and
a next_token_latency computed as:

$$next\_token\_latency = (total\_new\_tokens - 1) / (med\_thr),$$

where, (med_thr) represents a median throughput on a throughput curve, and total_new_tokens represents total number of output tokens to be generated in a given batch,

wherein, a target latency for training the performance model is obtained as summation of the TTFT and the next_token_latency.

In another embodiment, a system is provided. The system includes one or more hardware processors, a communication interface, and a memory storing a plurality of instructions. The plurality of instructions cause the one or more hardware processors to: receive configuration of a target Large Language Model (LLM) to be deployed, a user workload, an application type, and a plurality of latency constraints, as input; determine feasibility of each of a plurality of cloud instances comprising a plurality of hardware modules, with respect to accommodating the target LLM, by: receiving configuration data of each of the plurality of cloud instances; and performing a feasibility check for each of the plurality of cloud instances, comprises, determining, by comparing the configuration data of each of the plurality of cloud instances with the configuration of the target LLM, whether the target LLM is feasible with each of the plurality of cloud instances in terms of size of the target LLM and available storage space at each of the plurality of cloud instances; determine, by a performance model, a latency value for a plurality of batch sizes, for a plurality of target LLM-accelerator pairs, in each of a plurality of cloud instances identified as feasible based on the feasibility check; and generate a recommendation of one of the plurality of cloud instances identified as feasible, based on the determined latency, a measured cost of deployment, the user workload, the application type, the plurality of latency constraints, and an evaluated performance, wherein the recommended cloud instance is used to host the target LLM to perform an application for which the application type is received.

Further, the performance model used by the system is a machine learning (ML) based model trained on a training data comprising a plurality of model defining parameters, a plurality of hardware defining parameters, and a plurality of application related features.

Further, the one or more hardware processors of the system are configured to evaluate performance of each of the cloud instances identified as feasible, with respect to the determined latency, and a throughput measured in terms of queries per hour.

Further, in the system, the plurality of model defining parameters comprise a) total number of parameters, b) total number of heads, c) dimension of each of the heads, d) number of key-value heads, e) total decoder layers, f) an embedding dimension, g) dimension of a feed-forward network, h) a maximum context length supported by the target LLM, i) total compute Operations, j) total memory operations, and k) total number of feed-forward networks, the plurality of hardware defining parameters comprise a) a maximum compute and memory bandwidth, b) total number of hardware accelerators in each of the plurality of cloud instances, and c) an inter-device communication latency, and the plurality of application related features comprise a) an average output context length, and b) an average input context length.

Further, in the system, the one or more hardware processors are configured to estimate the total compute operations and the total memory operations using a prompting technique, by: prompting at least one reference LLM, by sending to the at least one LLM a base prompt that indicates how to calculate the memory operations and the compute operations of a plurality of layers of the target LLM; computing, by the at least one reference LLM, in response to the base prompt, values of the total memory operations and the total compute operations; and verifying, using an estimator, the computed values of the total memory operations and the total compute operations, wherein, an error value, if measured while verifying the computed values, is used as a feedback to improve equations used in the base prompt to calculate the memory operations and the compute operations.

Further, in the system, the one or more hardware processors are configured to train the performance model by using: a Time To First Token (TTFT) formulated as:

$$TTFT = k_1.i^2 + k_2.b^2 + 2.k_3.i.b + 2.k_4.i + 2.k_5.b + 2.k_6,$$

where,

$i$ is input sequence length, b is batch size, and $k_1$, $k_2$, $k_3$, $k_4$, $k_5$, and $k_6$ are constants with values optimized using an optimizer, and
a next_token_latency computed as:

next_token_latency = (total_new_tokens - 1) / (med_thr), where, (med_thr) represents a median throughput on a throughput curve, and total_new_tokens represents total number of output tokens to be generated in a given batch,
wherein, a target latency for training the performance model is obtained as summation of the TTFT and the next_token_latency.

In yet another aspect, a non-transitory computer readable medium is provided. The non-transitory computer readable medium includes a plurality of instructions, which cause one or more hardware processors to: receive configuration of a target Large Language Model (LLM) to be deployed, a user workload, an application type, and a plurality of latency constraints, as input; determine feasibility of each of a plurality of cloud instances comprising a plurality of hardware modules, with respect to accommodating the target LLM, by: receiving configuration data of each of the plurality of cloud instances; and performing a feasibility check for each of the plurality of cloud instances, comprises, determining, by comparing the configuration data of each of the plurality of cloud instances with the configuration of the target LLM, whether the target LLM is feasible with each of the plurality of cloud instances in terms of size of the target LLM and available storage space at each of the plurality of cloud instances; determine, by a performance model, a latency value for a plurality of batch sizes, for a plurality of target LLM-accelerator pairs, in each of a plurality of cloud instances identified as feasible based on the feasibility check; and generate a recommendation of one of the plurality of cloud instances identified as feasible, based on the determined latency, a measured cost of deployment, the user workload, the application type, the plurality of latency constraints, and an evaluated performance, wherein the recommended cloud instance is used to host the target LLM to perform an application for which the application type is received.

Further, the performance model used by the non-transitory computer readable medium is a machine learning (ML) based model trained on a training data comprising a plurality of model defining parameters, a plurality of hardware defining parameters, and a plurality of application related features.

Further, the one or more hardware processors are configured by the non-transitory computer readable medium to evaluate performance of each of the cloud instances identified as feasible, with respect to the determined latency, and a throughput measured in terms of queries per hour.

Further, in the non-transitory computer readable medium, the plurality of model defining parameters comprise a) total number of parameters, b) total number of heads, c) dimension of each of the heads, d) number of key-value heads, e) total decoder layers, f) an embedding dimension, g) dimension of a feed-forward network, h) a maximum context length supported by the target LLM, i) total compute Operations, j) total memory operations, and k) total number of feed-forward networks, the plurality of hardware defining parameters comprise a) a maximum compute and memory bandwidth, b) total number of hardware accelerators in each of the plurality of cloud instances, and c) an inter-device communication latency, and the plurality of application related features comprise a) an average output context length, and b) an average input context length.

Further, the one or more hardware processors are configured by the non-transitory computer readable medium to estimate the total compute operations and the total memory operations using a prompting technique, by: prompting at least one reference LLM, by sending to the at least one reference LLM a base prompt that indicates how to calculate the memory operations and the compute operations of a plurality of layers of the target LLM; computing, by the at least one reference LLM, in response to the base prompt, values of the total memory operations and the total compute operations; and verifying, using an estimator, the computed values of the total memory operations and the total compute operations, wherein, an error value, if measured while verifying the computed values, is used as a feedback to improve equations used in the base prompt to calculate the memory operations and the compute operations.

Further, the non-transitory computer readable medium configure the one or more hardware processors to train the performance model by using: a Time To First Token (TTFT) formulated as:

$$TTFT = k_1.i^2 + k_2.b^2 + 2.k_3.i.b + 2.k_4.i + 2.k_5.b + 2.k_6,$$

where,

$i$ is input sequence length, b is batch size, and $k_1, k_2, k_3, k_4, k_5,$ and $k_6$ are constants with values optimized using an optimizer, and
a next_token_latency computed as:

$$next\_token\_latency = (\text{total\_new\_tokens - 1}) / (\text{med\_thr}),$$

where,

(med_thr) represents a median throughput on a throughput curve, and total_new_tokens represents total number of output tokens to be generated in a given batch,
wherein, a target latency for training the performance model is obtained as summation of the TTFT and the *next_token_latency.*

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIGS. 1A and 1B collectively referred to as FIG. 1 illustrates an exemplary system for deployment of large language models (LLM) in cloud instances, according to some embodiments of the present disclosure.
FIG. 2 is a flow diagram depicting steps involved in the process of deployment of large language models (LLM) in cloud instances, by the system of FIG. 1, according to some embodiments of the present disclosure.
FIG. 3 is a flow diagram depicting steps involved in the process of a prompting technique for deployment of large language models (LLM) in cloud instances, by the system of FIG. 1, according to some embodiments of the present disclosure.

FIGS. 4A through 4C are example graphs depicting TTFT curve for LLaMA2 on various accelerators as a function of batch & input sizes, with reference to a plurality of state of the art techniques, according to some embodiments of the present disclosure.

FIGS. 4D through 4F are example graphs depicting throughput (tokens/s) for LLaMA2 on various accelerators as a function of batch & input sizes, with reference to a plurality of state of the art techniques, according to some embodiments of the present disclosure.

FIG. 4G is an example graph depicting actual vs predicted latencies of a performance model used by the system of FIG. 1, according to some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

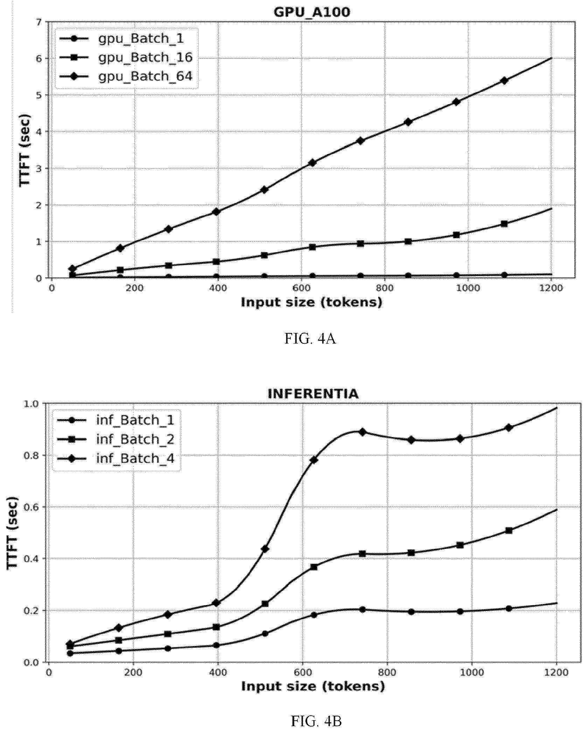

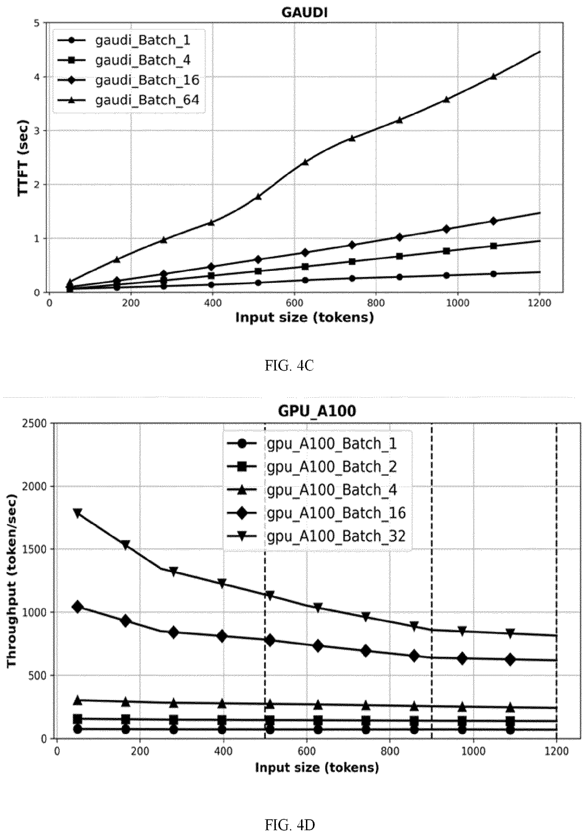

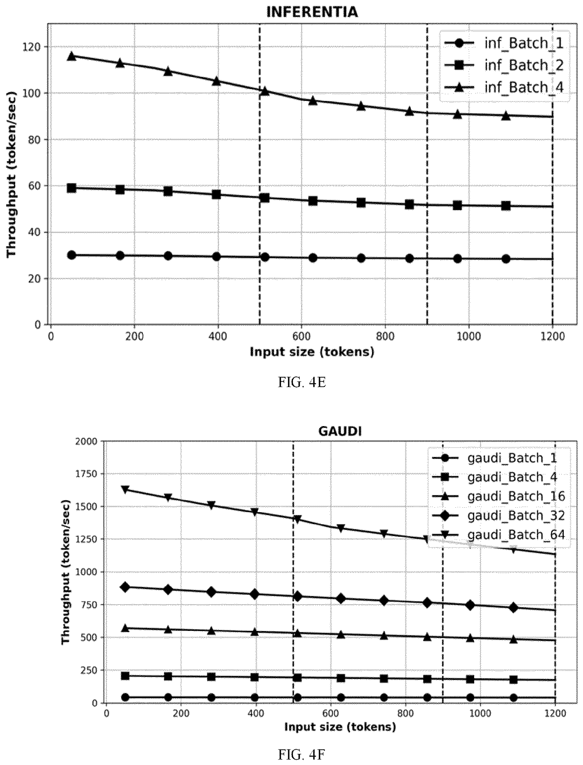

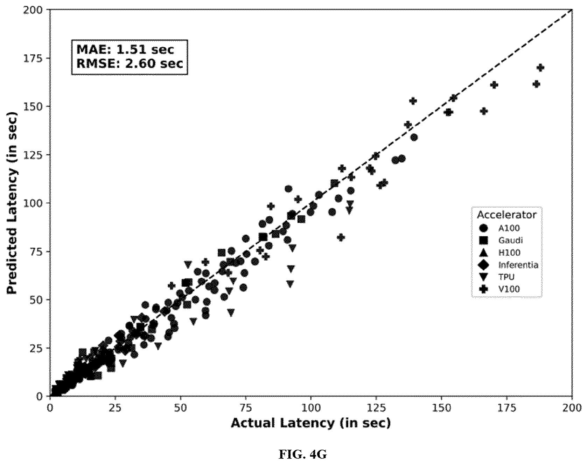

One of the existing model deployment approaches, MLPerf, has the disadvantage that it does not provide insights into how models should be configured on particular hardware or a cluster of such hardware, nor do they specify the framework to use for optimal performance. Their evaluation is conducted with a fixed input and output tokens' size for a batch size of one. In reality, latency and throughput (in tokens/s) are a function of batch size, input tokens, and output tokens. For instance, an application like essay writing using an LLM will have an input prompt size of up to 50-100 tokens with outputs of up to 500-1000 tokens. Similarly, document summarization may have larger input prompts with smaller output prompts. This significantly impacts latency and throughput, ultimately, the decision of choosing the right accelerator for inference. This is depicted in graphs given in FIGS. 4A through 4F. FIGS. 4A through 4C depict TTFT curve for LLaMA2 on various accelerators as a function of batch & input sizes, for the techniques GPU_A100, INFERENTIA, and GAUDI. FIGS. 4D through 4F depict throughput (tokens/s) for LLaMA2 on various accelerators as a function of batch & input sizes, for the techniques GPU_A100, INFERENTIA, and GAUDI. Results in FIGS. 4A through 4C indicate that Time to First Token (TTFT) is consistently high, with subsequent tokens generated at a predictable rate across various accelerators and models. From 4D through 4F, it can be observed that the time taken to generate first token follows a nearly second-order function with respect to both batch size and input prompt size.

To address these challenges, embodiments disclosed herein provide method and system for deployment of large language models (LLM) in cloud instances. The system receives configuration of a target Large Language Model (LLM) to be deployed, a user workload, an application type, and a plurality of latency constraints, as input. The system determines feasibility of each of a plurality of cloud instances comprising a plurality of hardware modules, with respect to accommodating the target LLM. Further, the system determines, by using a performance model, a latency value for a plurality of batch sizes, for a plurality of LLM-accelerator pairs, in each of a plurality of cloud instances identified as feasible based on the feasibility check. The system further generates a recommendation of one of the plurality of cloud instances identified as feasible, based on the determined latency, a measured cost of deployment, the user workload, the application type, the plurality of latency constraints, and an evaluated performance. The recommended cloud instance is used to host the LLM to perform an application for which the application type is received. This approach addresses the aforementioned challenges of the state of the art approaches by facilitating deployment of LLM in only those cloud instances which are dynamically decided as feasible in terms of various defined parameters.

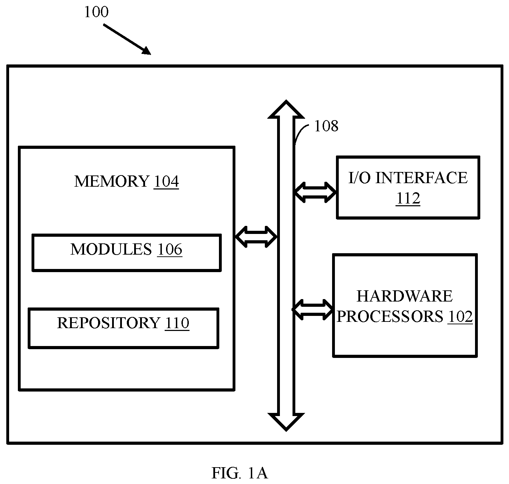

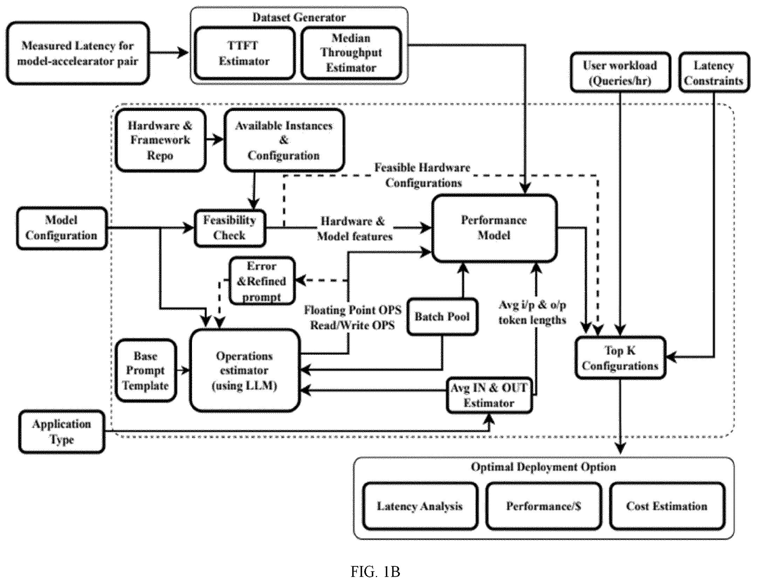

Referring now to the drawings, and more particularly to FIG. 1 through FIG. 4G, where similar reference characters denote corresponding features consistently throughout the figures, there are shown preferred embodiments and these embodiments are described in the context of the following exemplary system and/or method.

FIG. 1 illustrates an exemplary system for deployment of large language models (LLM) in cloud instances, according to some embodiments of the present disclosure.

The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of deployment of LLMs in cloud instances, being performed by the system of FIG. 1. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the deployment of LLMs in cloud instances.

The data repository (or repository) 110 may include a plurality of abstracted piece of code for refinement and data that is processed, received, or generated as a result of the execution of the plurality of modules in the module(s) 106.

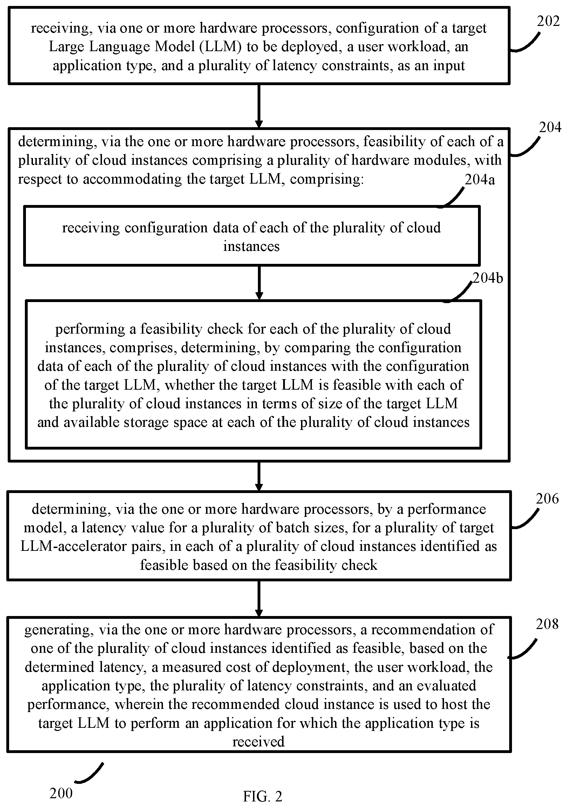

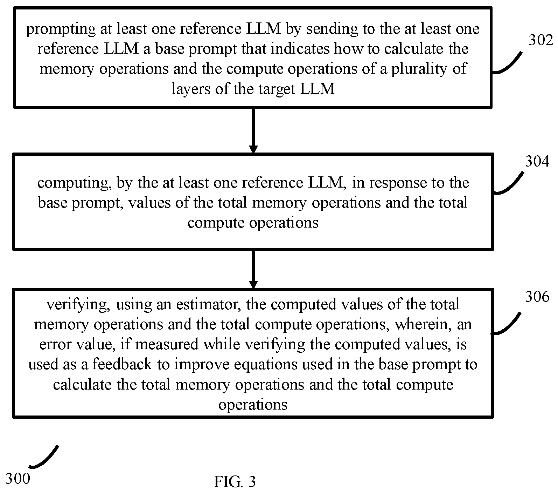

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the flow diagrams in FIG. 2 and FIG. 3, and the graphs in FIGS. 4A through 4D.

FIG. 2 is a flow diagram depicting steps involved in the process of deployment of large language models (LLM) in cloud instances, by the system of FIG. 1, according to some embodiments of the present disclosure.

In an embodiment, the system 100 comprises one or more data storage devices or the memory 104 operatively coupled to the processor(s) 102 and is configured to store instructions for execution of steps of a method 200 in FIG. 2, by the processor(s) or one or more hardware processors 102. The steps of the method 200 of the present disclosure will now be explained with reference to the components or blocks of the system 100 as depicted in FIG. 1, and the steps of flow diagram as depicted in FIGS. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 202 of the method 200, the system 100 receives, via the one or more hardware processors 102, configuration of a target Large Language Model (LLM) to be deployed, a user workload, an application type, and a plurality of latency constraints, as input. The configuration of the target LLM may specify size of the LLM, which in turn indicates space required for the target LLM in a cloud instance. In an embodiment, the configuration of the LLM is fed by an authorized user using a suitable user interface provided by the system 100.

Further, at step 204 of the method 200, the system 100 determines, via the one or more hardware processors 102, feasibility of each of a plurality of cloud instances with respect to accommodating the targetLLM. Each of the plurality of cloud instances includes a plurality of hardware modules, which may be utilized for supporting working of the target LLM when deployed. The feasibility check includes steps 204a and 204b as depicted in FIG. 2. At step 204a, the system 100 receives configuration data of each of the plurality of cloud instances. The configuration data may include data such as but not limited to memory/storage capacity of the cloud instance, details on the hardware modules in the cloud instance (which in turn may indicate capabilities of the cloud instance in terms of data storage, data processing and so on). At step 204b, the system 100 performs a feasibility check for each of the plurality of cloud instances. The feasibility check is done to determine, by comparing the configuration data of each of the plurality of cloud instances with the configuration of the target LLM, whether the target LLM is feasible with each of the plurality of cloud instances in terms of size of the target LLM and available storage space at each of the plurality of cloud instances. If a cloud instance doesn't have sufficient space to accommodate the target LLM, the system 100 determines that the cloud instance is not feasible. If the cloud instance has sufficient space to accommodate the target LLM, the system 100 determines that the cloud instance is feasible.

Further, at step 206 of the method 200, the system 100 determines, via the one or more hardware processors 102, by a performance model, a latency value for a plurality of batch sizes, for a plurality of target LLM-accelerator pairs, in each of a plurality of cloud instances identified as feasible based on the feasibility check. The performance model is a machine learning (ML) based model trained on a training data comprising a plurality of model defining parameters, a plurality of hardware defining parameters, and a plurality of application related features. The plurality of model defining parameters include a) total number of parameters, b) total number of heads, c) dimension of each of the heads, d) number of key-value heads, e) total decoder layers, f) an embedding dimension, g) dimension of a feed-forward network, h) a maximum context length supported by the target LLM, i) total compute Operations, j) total memory operations, and k) total number of feed-forward networks. The plurality of hardware defining parameters include a) a maximum compute and memory bandwidth, b) total number of hardware accelerators in each of the plurality of cloud instances, and c) an inter-device communication latency. The plurality of application related features include a) an average output context length, and b) an average input context length. The performance model, when trained for different model/accelerator combinations, was found to be giving a Root Mean Square Error (RMSE) value of 1.26s, and Mean Absolute Error (MAE) of 0.84, as depicted in FIG. 4I.

The performance model is trained using a Time To First Token (TTFT) formulated as:

$$TTFT = k_1.i^2 + k_2.b^2 + 2.k_3.i.b + 2.k_4.i + 2.k_5.b + 2.k_6, \qquad \text{---}$$

$$(1)$$

where,

$i$ is input sequence length, b is batch size, and $k_1$, $k_2$, $k_3$, $k_4$, $k_5$, and $k_6$ are constants with values optimized using an optimizer. The TFFT measures the latency before users see the first output after submitting a prompt, which is necessary for real-time interactions. Further, during the training, value of a *next_token_latency* is used. The value of the *next_token_latency* is computed as:

$$next\_token\_latency = (total\_new\_tokens - 1) / (med\_thr), \quad \text{--- (2)}$$

where,

(*med_thr*) represents a median throughput on a throughput curve, and *total_new_tokens* represents total number of output tokens to be generated in a given batch. A target latency for training the performance model is obtained as summation of the TTFT and the *next_token_latency.*

Values of the parameters 'total compute operations' and 'total memory operations' are determined using a prompting technique. Steps involved in the prompting technique are depicted in method 300 in FIG. 3, and are explained hereafter. At step 302 of the method 300, the system 100 prompts at least one reference LLM, by sending to the at least one reference LLM, a base prompt. The at least one reference LLM may be any LLM such as, but not limited to, ChatGPT, Llama3, or Gemini. The base prompt indicates how to calculate the memory operations and the compute operations of a plurality of layers of the target LLM, i.e., the related equations are part of the base prompt. Further, at step 304 of the method 300, the system 100 computes, via the at least one reference LLM, in response to the base prompt, values of the total memory operations and the total compute operations. The at least one reference LLM uses the equations and/ logic in the base prompt and generates/improves the base equations to compute the values of the total memory operations and the total compute operations for new LLM model. Further, at step 306 of the method 300, the at least one reference LLM verifies, using an estimator, the computed values of the total memory operations and the total compute operations. If the verification step generates an error value, the error value is used as a feedback to improve equations used in the base prompt to calculate the total memory operations and the total compute operations.

Referring back to the method 200, at step 208 of the method 200, the system 100 generates, via the one or more hardware processors 102, a recommendation of one of the plurality of cloud instances identified as feasible, based on the determined latency, a measured cost of deployment, the user workload, the application type, the plurality of latency constraints, and an evaluated performance. The recommendation comprises information on one or more hardware accelerators, supported inference/service framework, and a maximum batch size, related to the cloud instance being recommended. In an embodiment, the performance of each of the cloud instances identified as feasible, is evaluated with respect to the determined latency, and a throughput measured in terms of queries per second (QPS). The QPS indicates the number of queries an inference server can handle per second while maintaining consistent output tokens. Another term, Tokens Per Second, is often used to determine the rate at which tokens are generated after the first token. The cost of deployment is measured in terms of a parameter "Throughput Per Dollar", which assesses the cost efficiency of the LLM deployed on the cloud instance, calculated by dividing the total queries per hour by the on-demand hourly cost of the accelerator instance (most of the cloud platforms bill accelerator instances on the hourly basis). If N instances are used, the total cost would be N times the cost of one instance per hour. The recommended cloud instance is used to host the LLM to perform an application for which the application type is received. Functional flow involved in the method 200 is depicted in FIG. 1B.

The LLM is then deployed on the cloud instance that is recommended, so as to support intended application. Some examples of applications that can be supported by means of the cloud instance recommendation and the LLM deployment are, summarization, question answering, translation, and so on, which have different input and output prompt sizes that impacts the overall latency of inference.

An algorithmic representation of the process of generating the recommendation is given below:

Require: Target LLM

Ensure: Cost-optimal hardware platform with appropriate instance along with configurations

1: Get average input and output tokens for applications

2: Obtain the compute and read/write operations per second (OPS) for the given model using a proper template for LLM call

3: **for** Accelerator in hardware repository **do**

4:     **for** instance in accelerator **do**

5:         **if** model size + KV cache size > hardware memory capacity **then**

6:             **return**

7:         else

8:             calculate maximum batch size

9:             for batch_size in range (1, maximum_batch_size) do

10:             latency/throughput (tokens/s) = performance_model (input features)

11:             if latency > required latency then

12:                 return

13:             else

14:                 total_instances = workload / latency

15:                 total_cost = total_instances * instance_cost

16:                 feasible_config. Append ((accelerator, instance))

17:             end if

18:             end for

19:         end if

20:     end for

21: end for

22: Sort feasible_config based on performance per dollar metric = 0

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of deployment of LLMs in cloud instances. The embodiment, thus provides a mechanism for feasibility check of LLM for different batch sizes of different cloud instances. Moreover, the embodiments herein further provide a mechanism for generating a recommendation of a cloud instance for deployment of the LLM.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1.    A processor implemented method (200), comprising:

   receiving (202), via one or more hardware processors, configuration of a target Large Language Model (LLM) to be deployed, a user workload, an application type, and a plurality of latency constraints, as an input;
   determining (204), via the one or more hardware processors, feasibility of each of a plurality of cloud instances comprising a plurality of hardware modules, with respect to accommodating the target LLM, comprising:

receiving (204a) configuration data of each of the plurality of cloud instances; and

performing (204b) a feasibility check for each of the plurality of cloud instances, comprises, determining, by comparing the configuration data of each of the plurality of cloud instances with the configuration of the target LLM, whether the target LLM is feasible with each of the plurality of cloud instances in terms of size of the target LLM and available storage space at each of the plurality of cloud instances;

determining (206), via the one or more hardware processors, by a performance model, a latency value for a plurality of batch sizes, for a plurality of target LLM-accelerator pairs, in each of a plurality of cloud instances identified as feasible based on the feasibility check; and

generating (208), via the one or more hardware processors, a recommendation of one of the plurality of cloud instances identified as feasible, based on the determined latency, a measured cost of deployment, the user workload, the application type, the plurality of latency constraints, and an evaluated performance, wherein the recommended cloud instance is used to host the target LLM to perform an application for which the application type is received.

2. The processor implemented method as claimed in claim 1, wherein the performance model is a machine learning (ML) based model trained on a training data comprising a plurality of model defining parameters, a plurality of hardware defining parameters, and a plurality of application related features.

3. The processor implemented method as claimed in claim 1, wherein the performance of each of the cloud instances identified as feasible, is evaluated with respect to the determined latency, and a throughput measured in terms of queries per hour.

4. The processor implemented method as claimed in claim 2, wherein,

the plurality of model defining parameters comprise a) total number of parameters, b) total number of heads, c) dimension of each of the heads, d) number of key-value heads, e) total decoder layers, f) an embedding dimension, g) dimension of a feed-forward network, h) a maximum context length supported by the target LLM, i) total compute Operations, j) total memory operations, and k) total number of feed-forward networks,

the plurality of hardware defining parameters comprise a) a maximum compute and memory bandwidth, b) total number of hardware accelerators in each of the plurality of cloud instances, and c) an inter-device communication latency, and

the plurality of application related features comprise a) an average output context length, and b) an average input context length.

5. The processor implemented method as claimed in claim 4, wherein the total compute operations and the total memory operations are estimated using a prompting technique, comprising:

prompting at least one reference LLM (302), by sending to the at least one reference LLM a base prompt that indicates how to calculate the total memory operations and the total compute operations of a plurality of layers of the target LLM;

computing (304), by the at least one reference LLM, in response to the base prompt, values of the total memory operations and the total compute operations; and

verifying (306), using an estimator, the computed values of the total memory operations and the total compute operations, wherein, an error value, if measured while verifying the computed values, is used as a feedback to improve equations used in the base prompt to calculate the total memory operations and the total compute operations.

6. The processor implemented method as claimed in claim 1, wherein the performance model is trained using:

a Time To First Token (TTFT) formulated as:

$$TTFT = k_1.i^2 + k_2.b^2 + 2.k_3.i.b + 2.k_4.i + 2.k_5.b + 2.k_6,$$

where,

$i$ is input sequence length, b is batch size, and $k_1, k_2, k_3, k_4, k_5,$ and $k_6$ are constants with values optimized using an optimizer, and

a *next_token_latency* computed as:

$$next\_token\_latency = (total\_new\_tokens - 1) / (med\_thr),$$

where,

(*med_thr*) represents a median throughput on a throughput curve, and *total_new_tokens* represents total number of output tokens to be generated in a given batch,
wherein, a target latency for training the performance model is obtained as summation of the TTFT and the *next_token_latency*.

7. A system (100), comprising:

one or more hardware processors (102);
a communication interface (112); and
a memory (104) storing a plurality of instructions, wherein the plurality of instructions cause the one or more hardware processors to:

receive configuration of a target Large Language Model (LLM) to be deployed, a user workload, an application type, and a plurality of latency constraints, as an input;
determine feasibility of each of a plurality of cloud instances comprising a plurality of hardware modules, with respect to accommodating the target LLM, by:

receiving configuration data of each of the plurality of cloud instances; and
performing a feasibility check for each of the plurality of cloud instances, comprises, determining, by comparing the configuration data of each of the plurality of cloud instances with the configuration of the target LLM, whether the target LLM is feasible with each of the plurality of cloud instances in terms of size of the target LLM and available storage space at each of the plurality of cloud instances;

determine by a performance model, a latency value for a plurality of batch sizes, for a plurality of target LLM-accelerator pairs, in each of a plurality of cloud instances identified as feasible based on the feasibility check; and
generate a recommendation of one of the plurality of cloud instances identified as feasible, based on the determined latency,
a measured cost of deployment, the user workload, the application type, the plurality of latency constraints, and an evaluated performance, wherein the recommended cloud instance is used to host the target LLM to perform an application for which the application type is received.

8. The system as claimed in claim 7, wherein the performance model is a machine learning (ML) based model trained on a training data comprising a plurality of model defining parameters, a plurality of hardware defining parameters, and a plurality of application related features.

9. The system as claimed in claim 7, wherein the one or more hardware processors are configured to evaluate performance of each of the cloud instances identified as feasible, with respect to the determined latency, and a throughput measured in terms of queries per hour.

10. The system as claimed in claim 8, wherein,

the plurality of model defining parameters comprise a) total number of parameters, b) total number of heads, c) dimension of each of the heads, d) number of key-value heads, e) total decoder layers, f) an embedding dimension, g) dimension of a feed-forward network, h) a maximum context length supported by the target LLM, i) total compute Operations, j) total memory operations, and k) total number of feed-forward networks,
the plurality of hardware defining parameters comprise a) a maximum compute and memory bandwidth, b) total number of hardware accelerators in each of the plurality of cloud instances, and c) an inter-device communication latency, and
the plurality of application related features comprise a) an average output context length, and b) an average input context length.

**11.** The system as claimed in claim 10, wherein the one or more hardware processors are configured to estimate the total compute operations and the total memory operations using a prompting technique, by:

prompting at least one reference LLM, by sending to the at least one reference LLM a base prompt that indicates how to calculate the total memory operations and the total compute operations of a plurality of layers of the target LLM;

computing, by the at least one reference LLM, in response to the base prompt, values of the total memory operations and the total compute operations; and

verifying, using an estimator, the computed values of the total memory operations and the total compute operations, wherein, an error value, if measured while verifying the computed values, is used as a feedback to improve equations used in the base prompt to calculate the total memory operations and the total compute operations.

**12.** The system as claimed in claim 7, wherein the one or more hardware processors are configured to train the performance model using:

a Time To First Token (TTFT) formulated as:

$$TTFT = k_1.i^2 + k_2.b^2 + 2.k_3.i.b + 2.k_4.i + 2.k_5.b + 2.k_6,$$

where,

$i$ is input sequence length, b is batch size, and $k_1, k_2, k_3, k_4, k_5,$ and $k_6$ are constants with values optimized using an optimizer, and

a next_token_latency computed as:

$$next\_token\_latency = (total\_new\_tokens - 1)/(med\_thr),$$

where,

($med\_thr$) represents a median throughput on a throughput curve, and $total\_new\_tokens$ represents total number of output tokens to be generated in a given batch,

wherein, a target latency for training the performance model is obtained as summation of the TTFT and the $next\_token\_latency$.

**13.** One or more non-transitory machine-readable information storage mediums comprising one or more instructions which when executed by one or more hardware processors cause:

receiving configuration of a target Large Language Model (LLM) to be deployed, a user workload, an application type, and a plurality of latency constraints, as an input;

determining feasibility of each of a plurality of cloud instances comprising a plurality of hardware modules, with respect to accommodating the target LLM, comprising:

receiving configuration data of each of the plurality of cloud instances; and

performing a feasibility check for each of the plurality of cloud instances, comprises, determining, by comparing the configuration data of each of the plurality of cloud instances with the configuration of the target LLM, whether the target LLM is feasible with each of the plurality of cloud instances in terms of size of the target LLM and available storage space at each of the plurality of cloud instances;

determining by a performance model, a latency value for a plurality of batch sizes, for a plurality of target LLM-accelerator pairs, in each of a plurality of cloud instances identified as feasible based on the feasibility check; and

generating a recommendation of one of the plurality of cloud instances identified as feasible, based on the determined latency, a measured cost of deployment, the user workload, the application type, the plurality of latency constraints, and an evaluated performance, wherein the recommended cloud instance is used to host the target LLM to perform an application for which the application type is received.

100

MEMORY 104

MODULES 106

REPOSITORY 110

108

I/O INTERFACE
112

HARDWARE
PROCESSORS 102

FIG. 1A

FIG. 1B

receiving, via one or more hardware processors, configuration of a target Large Language Model (LLM) to be deployed, a user workload, an application type, and a plurality of latency constraints, as an input  *202*

determining, via the one or more hardware processors, feasibility of each of a plurality of cloud instances comprising a plurality of hardware modules, with respect to accommodating the target LLM, comprising:  *204*  *204a*

receiving configuration data of each of the plurality of cloud instances

*204b*

performing a feasibility check for each of the plurality of cloud instances, comprises, determining, by comparing the configuration data of each of the plurality of cloud instances with the configuration of the target LLM, whether the target LLM is feasible with each of the plurality of cloud instances in terms of size of the target LLM and available storage space at each of the plurality of cloud instances

determining, via the one or more hardware processors, by a performance model, a latency value for a plurality of batch sizes, for a plurality of target LLM-accelerator pairs, in each of a plurality of cloud instances identified as feasible based on the feasibility check  *206*

generating, via the one or more hardware processors, a recommendation of one of the plurality of cloud instances identified as feasible, based on the determined latency, a measured cost of deployment, the user workload, the application type, the plurality of latency constraints, and an evaluated performance, wherein the recommended cloud instance is used to host the target LLM to perform an application for which the application type is received  *208*

*200*

FIG. 2

prompting at least one reference LLM by sending to the at least one reference LLM a base prompt that indicates how to calculate the memory operations and the compute operations of a plurality of layers of the target LLM

302

computing, by the at least one reference LLM, in response to the base prompt, values of the total memory operations and the total compute operations

304

verifying, using an estimator, the computed values of the total memory operations and the total compute operations, wherein, an error value, if measured while verifying the computed values, is used as a feedback to improve equations used in the base prompt to calculate the total memory operations and the total compute operations

306

300

FIG. 3

FIG. 4A

FIG. 4B

FIG. 4C

FIG. 4D

FIG. 4E

FIG. 4F

**FIG. 4G**

**EUROPEAN SEARCH REPORT**

Application Number

EP 25 20 2091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONG, PANG, WANG, WANG, WANG, CHEN, SONG, JIN, MENG, HOU: "The Early Bird Catches the Leak: Unveiling Timing Side Channels in LLM Serving Systems", CORNELL UNIVERSITY LIBRARY, 30 September 2024 (2024-09-30), XP091893402, * abstract * * Sections 1, 2.2, 2.3, 6 * | 1-13 | INV. G06F9/50 G06N20/00 |
| X | US 2021/232399 A1 (VISA INTERNATIONAL SERVICE ASSOCIATION) 29 July 2021 (2021-07-29) * abstract * * paragraphs [0001], [0006], [0047] - [0053], [0057] - [0061], [0077] - [0084] * * figure 3 * | 1-13 | |
| A | ZONG, LIU, CHEN, HU, ZHU, LIU, JIN, ZHANG: "DistServe: Disaggregating Prefill and Decoding for Goodput-optimized Large Language Model Serving", CORNELL UNIVERSITY LIBRARY, 19 March 2024 (2024-03-19), XP091703204, * the whole document * | 1-13 | TECHNICAL FIELDS SEARCHED (IPC) G06F G06E G06N |
| A | CHENG, WANG, HU, YANG, LI, ZHANG: "Towards SLO-Optimized LLM Serving via Automatic Inference Engine Tuning", CORNELL UNIVERSITY LIBRARY, 8 August 2024 (2024-08-08), XP091847610, * the whole document * | 1-13 | |

-/--

The present search report has been drawn up for all claims

| Place of search | Date of completion of the search | Examiner |
|---|---|---|
| The Hague | 9 February 2026 | Tomàs Blanch, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 20 2091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XUPENG, CHUNAN, JIANGFEI, XIAOLI, DAHUA, BIN, ZHIHAO: "SpotServe: Serving Generative Large Language Models on Preemptible Instances", PROCEEDINGS OF THE 2023 ACM SIGPLAN INTERNATIONAL SYMPOSIUM ON NEW IDEAS, NEW PARADIGMS, AND REFLECTIONS ON PROGRAMMING AND SOFTWARE, 27 April 2024 (2024-04-27), pages 1112-1127, XP059616999, DOI: 10.1145/3620665.3640411 ISBN: 979-8-4007-0393-5 * the whole document * ----- | 1-13 | |

**TECHNICAL FIELDS SEARCHED (IPC)**

The present search report has been drawn up for all claims

| Place of search | Date of completion of the search | Examiner |
|---|---|---|
| The Hague | 9 February 2026 | Tomàs Blanch, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 2091

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2026

| Patent document cited in search report | Publication date | Patent family member(s) | Publication date |
|---|---|---|---|
| US 2021232399 A1 | 29-07-2021 | US 2021232399 A1 | 29-07-2021 |
| | | US 2023342203 A1 | 26-10-2023 |
| | | US 2025068466 A1 | 27-02-2025 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421075283